# EUROPEAN PATENT SPECIFICATION

(11) **EP 3 800 110 B1**
(45) Date of publication and mention of the grant of the patent: **30.11.2022**
(21) Application number: 19201183.1
(22) Date of filing: 02.10.2019
(51) Int. Cl.: B62D 1/08

(54) **STEERING WHEEL WITH A STORAGE AND STEERING CONFIGURATION**
LENKRAD MIT EINEM SPEICHER UND LENKKONFIGURATION
VOLANT DOTÉ D'UN STOCKAGE ET CONFIGURATION DE DIRECTION

(43) Date of publication of application: 07.04.2021
(73) Proprietor: NIO Holding Co., Ltd., Hefei City, Anhui Province (CN)
(72) Inventor: PAESEN, Jochen, Anting, Jiading, Shanghai (CN); CUEFF, Julien, Anting, Jiading, Shanghai (CN); FROMME, Philipp, Anting, Jiading, Shanghai (CN)
(74) Representative: Vossius & Partner Patentanwälte Rechtsanwälte mbB

(56) References cited:
- WO-A1-2016/169684
- DE-A1- 2 013 795
- DE-A1-102017 223 111

## Description

The present invention relates to a steering wheel, claimed in claim 1, for a motor vehicle being configured to be adjusted between a steering configuration and a storage configuration. The invention further relates to a method, claimed in claim 15, for adjusting a steering wheel of a motor vehicle between a storage configuration and a steering configuration. In addition, the invention also relates to a steering arrangement and to a motor vehicle.

Steering wheels that are adjustable between a storage configuration and a steering configuration may provide good comfort and handling for a driver during steering of the vehicle that is comparable to regular steering wheels while providing increased space for the driver or a person sitting in the driver's seat when the wheel is not used for steering the vehicle. For example, in the steering configuration, a steering wheel may be turned for directing the front wheels of the vehicle in the desired direction. In the storage configuration, the wheel may occupy less space or extend less into the passenger compartment of the vehicle. WO 2016/169684 A1 describes an arrangement of a steering wheel in a motor vehicle suitable for autonomous driving. The steering wheel can be pivoted or tilted from a usage position into an idle position. For that purpose, a steering wheel rim is pivotably connected to a single spoke of the steering wheel. The steering wheel rim is guided within a rim guide sleeve, wherein the rim guide sleeve can be pivoted in a guiding end of the spoke about a pivot axis. The single spoke supporting the steering wheel load needs to support high-loads due to the construction described in WO 2016/169684 A1. In particular, any force acting on a side of the rim opposite the spoke connection will result in a high torque acting on the connection between the spoke and the rim. Further, the pivot joint needs to be capable to lock the rim in a usage position of the steering wheel. Accordingly, the required pivot joint between the rim and the spoke results in a complicated, expensive, heavy and large steering wheel design.

US 2014/0277896 A1 describes a steering wheel with a manual driving mode and an autonomous mode. Compared to the driving mode, a wheel rim is retracted from the driver along the steering column while a main body portion in the center stays in place. The retracted rim may still block a view in a similar way to its extended position in the driving mode.

US 2018/0141581 A1 describes a steering apparatus that allows adjustment of the steering wheel position with a telescopic mechanism and an electric tilt mechanism. Such an adjustment only allows aligning the steering wheel to a driver's position, size and preferences. No two distinct configurations that may enhance comfort are described.

DE 10 2017 223 111 A1 describes a steering device having a steering wheel rim mounted to be rotatable about a rotation axis and a steering pillar section. The steering wheel rim is connected to the steering pillar section and is pivotable about a pivot axis between a first position and a second position. The pivot axis is perpendicular to the rotation axis and is offset along the rotation axis in the second position relative to the first position.

A task of the present invention is to provide an improved steering wheel with a steering configuration and a storage configuration, to provide an improved steering arrangement, to provide an improved motor vehicle and to provide an improved method for adjusting a steering wheel with a steering configuration and a storage configuration, in particular to mitigate or overcome problems existing in the art. Preferably, the present invention allows providing a robust and cost-efficient steering wheel.

According to the invention, this task is resolved by the subject-matter of the independent claims. Advantageous embodiments and expedient developments are detailed in the respective dependent claims, wherein advantageous embodiments and expedient developments of one aspect also constitute advantageous embodiments and expedient developments of other aspects.

A first aspect of the invention relates to a steering wheel for a motor vehicle, the steering wheel comprising a hub configured to be connected to a steering column of the motor vehicle and a rim connected to the hub. A driver may turn the wheel, in particular by handling the rim, to turn the steering column connected to the hub. With the turning of the wheel, the driver may control the driving direction of the vehicle. The hub may comprise components and structures for the attachment to the steering column, such as threads, one or more recesses and/or protrusions, clamps and/or clamping surfaces. The connection of the hub to the steering column may allow to align a steering column axis to a turning axis of the steering wheel, which may correspond to an axis of symmetry of the steering wheel, in particular its hub. Usually, the orientation of the steering column relative to the hub is predetermined by the design of the hub and can be unambiguously determined from the steering wheel, in particular its hub and/or symmetry. The steering column may also be understood as the bearing and/or shaft for supporting the steering wheel, in particular its hub. This may in particular be the case if the steering wheel is not mechanically connected to the wheels, for example in a car with a steer-by-wire system. The axis of the steering column is preferably coaxial or equal to an axis of rotation of the steering wheel for steering the vehicle.

The rim may be of unitary one-piece construction or may comprise several segments. Preferably, the rim forms an essentially continuous rim, in particular a ring-shaped and/or plane rim. Such a design is cost-effective, durable and comfortable for steering. The shape of the rim may, for example, be circular, oval, rectangular, square or have an irregular shape.

The steering wheel is configured to be adjusted between a steering configuration and a storage configuration. The rim is connected to the hub by at least a first spoke and at least a second spoke, wherein the second spoke is spaced apart from the first spoke. The first spoke is preferably pivotably connected to the rim with a pivot axis. For example, a rim-facing end of the first spoke and an adjacent part of the rim may form a pivot joint that defines the pivot axis. The first spoke and the rim may be attached to each other by the pivot joint. The connection of the first spoke and the rim to each other may allow a relative pivoting of the rim to the first spoke around the pivot axis but may otherwise fix the first spoke and the rim to each other. Accordingly, the rim may pivot around the pivot axis. The hub-facing end of the first spoke may be rigidly connected to the hub to fix a relative position of the first spoke and the hub. Preferably the pivot axis is arranged horizontally with the steering wheel facing straight forward for driving straight forward and/or with the wheels facing straight.

Further, the at least one second spoke is mounted to a sliding guide of the hub. Accordingly, a hub-facing end of the second spoke may transversely move relative to the hub. A rim-facing end of the second spoke may be rigidly connected to the rim. A sliding movement of the second spoke in the guide of the hub may allow the second spoke to stay connected to the hub and support the rim even during pivoting of the rim around the pivot axis. The sliding movement may allow to compensate a relative position change of the second spoke rim connection to the hub due to a pivoting movement of the rim around the above described pivot axis.

The sliding guide connection of the second spoke and the pivoting connection of the first spoke is such that the rim pivots around the pivot axis and the second spoke slides along the guide of the hub when the steering wheel is adjusted between the steering configuration and the storage configuration. This allows to support the rim in each configuration not only by the first spoke but also by the at least one second spoke. The first spoke therefore does not need to support the steering wheel load just by itself. In particular, any force acting on a side of the rim opposite the spoke connection will not necessarily result in a high torque acting on the connection between the first spoke and the rim since the second spoke may support at least part of this force as well. In particular, due to the first and second spoke being spaced-apart the same load may act on the different spokes with different lever arms, allowing a better load distribution on the rim support and the respective spokes to better withstand any external forces acting on the rim. Further, the pivot joint does not need to be capable to lock the rim in a usage position of the steering wheel. Instead, such locking may be provided in the hub, in particular by the sliding guide, and/or by the second spoke. Accordingly, the pivot joint between the rim and the first spoke may be uncomplicated, inexpensive, light and compact. This may also result in an uncomplicated, inexpensive, light and compact and durable steering wheel design.

The sliding guide may be designed, for example, as a depression, such as a groove, in the body of the hub, or other form-fitting engagement, in particular with one degree of freedom of translation for the second spoke supported thereby. The second spoke may be held in the sliding guide, for example, by an undercut and/or by an attachment to rails. The steering wheel may comprise more than one second spoke, such as two or more second spokes. Each second spoke may be spaced-apart to each other and/or the first spoke for a beneficial support design of the rim. In this document, when referring to the second spoke or the at least one second spoke, this may also refer to cases with more than one second spoke and define respective features for just one, some, or all of the second spokes.

In the steering configuration, the rim, in particular a major plane of extension defined by the rim, may form a first angle to a steering axis for turning the steering wheel, an axis of symmetry of the hub and/or to an axis of a steering column of the vehicle. For example, the hub may be configured to comprise the steering column and/or to define the axis of the steering column. In the storage configuration, the rim, in particular the major plane of extension defined by the rim, may form a second angle to the steering axis for turning the steering wheel, the axis of symmetry of the hub and/or to the axis of a steering column of the vehicle, which is different to the first angle. For example, the rim may be arranged perpendicular to said axis in the steering configuration and may be arranged non-perpendicular in the storage configuration. For example, a lower or upper end of the rim may be tilted away from a driver's seat and/or towards a dashboard in the storage configuration in comparison to the steering configuration. For example, in the storage configuration, a part of the rim may be resting on a dashboard, while that part, in particular the whole rim, is spaced away from the dashboard in the steering configuration. Alternatively, at least a part of the rim, preferably essentially the whole rim, is arranged closer to the dashboard and/or further away from the driver in the storage configuration than in the steering configuration.

In the storage configuration, the steering wheel does not block a view through a windshield and/or on instruments in a dashboard or is at least less blocking than in the steering configuration, in particular if an upper part of the rim is tilted away from the driver during adjustment of the steering wheel configuration and/or with the pivot axis arranged at a lower end of the rim. For example, with an upper part rotated out of the view, a person seated in the driver's seat may easily see and/or reach a screen in the dashboard. Alternatively, in the storage configuration, more available leg-room may be provided, in particular if a lower part of the rim is tilted away from the driver during adjustment of the steering wheel configuration and/or with the pivot axis arranged at an upper end of the rim. Overall, more space may be made available to that person. Valuable space directly accessible by the driver may be freed for his personal use. Simultaneously, in the steering configuration, the steering wheel may be positioned for particular comfortable handling and easy reachability by the driver.

The rim is preferably configured for gripping and/or handling the steering wheel. Usually, a plane of the rim is arranged perpendicular to the axis of the steering column for ease of steering in the steering configuration. For example, the rim may be partially or completely ring shaped. Such a ring does not necessarily have to be round or circular, but may also have other shapes, such as forming an oval or having partially curved and/or flat sides. In particular, a flat bottom of the steering wheel when aligned for straight driving may be beneficial in providing more leg room. The hub may comprise an air bag and one or more actuation elements, for example for a motor vehicle horn and/or for controlling other car functions and/or devices, such as a radio. Such actuation elements may also be arranged on the rim and/or spokes connecting the rim to the hub. Preferably, the hub is a central element between the rim segments. In particular, the hub may be arranged in a plane of symmetry of the steering wheel.

The spokes may extend perpendicular to the axis of the steering column or transversal, providing a distance between the hub and the rim in the direction along the axis of the steering column. In a simple case, the spokes may be configured as essentially straight bars or tubes.

Preferably, any connection may be a mechanical connection. In particular, the connection of the hub to the steering column may be a fixed connection, possibly a releasably fixed connection. For example, a connection may mean that two parts are screwed to each other, bonded and/or of uniform integral design. In particular, the connection of spokes to other parts may be mechanically fixed if not indicated otherwise, for example being pivotably or glidingly connected. However, any such connections may comprise additional types of connections, such as an electrical wiring for the actuation elements.

"Behind" and "in front" may be defined from a driver's perspective, i.e., the side facing a driver is the front and the opposite side is the back of the steering wheel and its components. Preferably, "behind" and "front" form a direction that additionally or alternatively reversely corresponds to a forward-backwards direction of a car, wherein a front of the steering wheel is facing in the backward direction of the car. Alternatively or additionally, the "back side" may also be defined as facing the dashboard when mounted to a motor vehicle and/or the "front side" as facing the passenger compartment in the vehicle and/or a driver' seat.

The axis of the steering column may correspond to an axis of the hub and/or an axis around which the steering wheel is rotated and/or turned to steer the motor vehicle. The axis of the steering column and the steering wheel and/or its hub may be coaxial to each other. The axis of the steering column may be recognizable on the steering wheel, in particular due to mounting elements and/or surfaces, such as bearings for attaching of the hub and the steering column to each other.

The storage configuration may also be referred to as a tilted-away configuration and/or a configuration providing the passenger with more available interior space and/or a better view of a dashboard and/or a display. In the context of this document, the driver's seat may be defined as the seat facing the steering wheel and/or as the seat that allows a person sitting therein to handle the steering wheel at least in the steering configuration.

In a further preferred embodiment of the steering wheel, the steering wheel is configured such that the part of the second spoke mounted to the sliding guide is arranged closer to a dashboard of the motor vehicle in the storage configuration than in the steering configuration. Such a configuration provides the person sitting in the driver's seat with more available free-space for his use, increasing overall comfort. The person sitting in the driver's seat may be referred to as the driver, even if not actively controlling, in particular steering, the vehicle. The distance may be defined along a line from the driver in a view along the steering column. The second spoke and the area of the rim adjacent to the second spoke may move backward accordingly, moving at least this part of the rim away from the driver. By comparison, a connection between first spoke and the rim and the related part of the rim may essentially maintain the distance to the driver. Such a movement of the rim may also be described as tilting a part of the rim backwards when adjusting from steering mode to the storage mode, in particular an upper part or lower part away from the driver and/or towards the dashboard of the motor vehicle.

In a further preferred embodiment of the steering wheel, the pivot axis is essentially parallel to an axis formed by a straight line between the connection of the second spoke and the rim and the connection of the second spoke and the hub. Such a design may result in a simple mechanism and therefore simple steering wheel.

In a further preferred embodiment of the steering wheel, the pivot axis is arranged at a rim-facing end of the at least one first spoke. This may allow to attach the first spoke rigidly to the hub. Further, a pivot joint may be easily formed by the connection between the first spoke and the rim, for example by arranging, preferably fixing, a part of the rim in a through-hole of the first spoke.

In a further preferred embodiment of the steering wheel, the pivot axis is perpendicular to an axis of the steering column. Such a design provides a pivot axis whose alignment is intuitive for the users. Further, the rim may thus easily be configured to be tiltable to conform well against a contour of the dashboard in the storage configuration.

In a further preferred embodiment of the steering wheel, the pivot axis and the axis of the steering column do not intersect. This may allow a particular large space to be freed for use of the driver in the storage configuration. In particular, the hub stays essentially centrally arranged in the rim with such a design.

Preferably, the pivot axis is arranged essentially horizontally with the steering wheel facing straight forward for driving straight forward and/or with the wheels facing straight.

The steering wheel may also comprise a locking mechanism that blocks adjustment between the configuration in the steering configuration and/or the storage configuration, in particular by blocking movement of rim segments relative to the hub. Such a locking mechanism may increase safety and also allow secure steering despite the possibility to pivot the rim between the two configurations.

In a further preferred embodiment of the steering wheel, the connection between the second spoke and the hub may comprise a locking mechanism for locking the adjustment of the steering wheel configuration. Such an arrangement of the locking mechanism is preferable since it may be easily integrated into the hub.

In addition, the sliding guide may also form end-stops that correspond to respective configurations of the steering wheel that provide a resting surface for the second spoke at least in one direction in each configuration. The resting surface may support high loads. Further, the locking mechanism may thus be configured to only block movement in one direction in each configuration, resulting in a simpler and/or more robust locking mechanism. For example, the locking mechanism may be configured to block sliding of the second spoke in the guide. Preferably, the locking mechanism is arranged on and/or in the hub and/or is configured to be part of the sliding guide of the hub. In particular, the body of the hub can form a casing for the locking mechanism, thus protecting the locking mechanism.

In a further preferred embodiment of the steering wheel, the guide is following an arc defined by the distance between the connection of the first spoke with the rim and the connection of the second spoke with the rim in a view along the pivot axis, in particular being measured in a direction perpendicular to the view along the pivot axis. The sliding guide, may, for example, have the shape of a part of a circle, in particular having a radius that corresponds to the distance between the connection of the first spoke with the rim and the second spoke with the rim in a view along the pivot axis. In other words, the sliding guide may have an arc shape and/or guide the second spoke along an arc-shaped path when adjusting the steering wheel configuration. The second spoke may be optionally rotatably mounted to the guide, in particular so that the second spoke may rotate around an axis perpendicular to the guiding direction and/or a translatory movement of the second spoke. The pivot axis may form the centre of the arc-shape or circle of the sliding guide. Correspondingly, the radius may be the distance between the pivot axis and the sliding guide and/or to the hub-side end of the second spoke. Such a design of the sliding guide may prevent tension due to a relative distance change during tilting of the rim. In particular, the second spoke may slide in the guide with low resistance and/or such a design may prevent unwanted jamming of the sliding movement of the second spoke in the guide.

In a further preferred embodiment of the steering wheel, the guide is a straight guide. Such a design of the guide is simple, easy to manufacture and cost-effective.

In a further preferred embodiment of the steering wheel, the second spoke is pivotably connected to the hub with a second spoke hub link pivot axis and the second spoke is pivotably connected to the rim with a second spoke rim link pivot axis, wherein the second spoke hub link pivot axis and the rim link pivot axis are parallel to each other. A component providing the pivotable connection of the second spoke to the hub may thus define the hub link pivot axis and a component providing the pivotable connection of the second spoke to the rim may thus define the rim link pivot axis. With such a design, the second spoke may form a pivotable link between the rim and the hub. In particular, the second spoke may pivot relatively to both the hub and the rim when the rim is pivoted around the pivot axis for configuration adjustment of the steering wheel. The pivotable link may compensate for a shift in distance relative of the rim to the hub at the location of the second spoke during pivoting around the pivot axis of the connection of the first spoke to the rim. Preferably the second spoke hub and rim link pivot axis are parallel to the pivot axis of the connection of the first spoke to the rim. The sliding guide may be smaller, thus facilitating packaging in the hub. In particular, the pivotable link by the second spoke may facilitate using a straight guide and/or lowering the upper part of the rim further downward during tilting into the storage configuration. The design with the pivotable link by the second spoke is particular beneficial in combination with the straight guide as it may prevent jamming of the sliding of the second spoke in the guide.

The second spoke hub link is preferably arranged in the guide. During the transformation from the steering configuration to the storage configuration the rim link pivot axis is executing a movement in the shape of an arc while the hub link pivot axis preferably is executing a straight movement along sliding guide, wherein the sliding guide is straight. With such a design, the second spoke may be compact and/or shorter and/or the guide may be smaller, resulting in a more compact hub.

In a further preferred embodiment of the steering wheel, the hub link pivot axis and the rim link pivot axis are parallel to the pivot axis at the connection of the first spoke with the rim. Such a design allows for a particular smooth pivoting of the steering wheel rim while also providing strong support for the rim in each tilted position.

In a further preferred embodiment of the steering wheel, the steering wheel comprises an actuator, such as an electric motor, for adjusting the steering wheel between the storage configuration and the steering configuration, in particular by moving the second spoke along the guide. Such an actuator may allow comfortable and in particular automatic adjustment of the steering wheel configuration. The actuator may be easily arranged radially within the hub, resulting in a compact packing of the steering wheel. The hub may provide a casing for the actuator for its protection, thus possibly rendering additional casing unnecessary.

In a further preferred embodiment of the steering wheel, the steering wheel is configured to be adjusted into the steering configuration in response to a change into a manual driving mode of the motor vehicle and into the storage configuration in response to a change into an autonomous driving mode of the motor vehicle, preferably by means of the above-described actuator. Such a design of the steering wheel allows to automatically provide the steering wheel configuration that is appropriate, in particular most comfortable, in the current mode of the vehicle. A manual driving mode may be any mode where the driver is required to steer the vehicle with the steering wheel and/or must be able to overrule autonomous steering commands by an autonomous driving device of the vehicle. For example, such overruling is usually required when the vehicle is at least partially controlled by a lane-keeping assistant. An autonomous driving mode may be any mode where the driver is not required to steer the vehicle with the steering wheel during a driving operation, in particular such a high-level autonomous control that the possibility to overrule autonomous steering commands by the autonomous driving device of the vehicle is not required anymore. In addition, the steering wheel may also be configured to be adjusted into the storage configuration in response to the vehicle being stopped and/or the engine being turned off. This allows a comfortable rest and easy entry into and exit from the driver's seat.

For the automatic adjustment, the steering wheel may comprise a control device for adjusting its configuration, an actuator configured for moving parts of the steering wheel, in particular by tilting the rim around the pivot axis, in response to a control signal provided by the control device for adjusting the steering wheel configuration and/or a sensor configured for detecting the driving mode of the vehicle. In a very simple example, such a sensor may be an electrical interface that allows the control device to receive a signal from an autonomous driving device of the motor vehicle indicating the current driving mode of the vehicle.

In the storage configuration, the steering wheel may be configured to not rotate around the axis of the steering column, in particular to a turning of the front wheels due to a steering command by the autonomous control device. This allows more compact storage and more freed passenger compartment space, in particular because the immobile steering wheel may rest on vehicle components such as the dashboard. Alternatively, the steering wheel may be configured to rotate around the axis of the steering column not only in the steering configuration but also the storage configuration, for example turning with the front wheels due to a steering command by the autonomous control device. This may provide the driver with visual feedback on the autonomous steering commands and increase his trust in such a system. The control unit may correspond to the above-described control device. The sensor may correspond to the above-described sensor or may, for example, be a processor or other device that handles an internal status indication or sensor of the autonomous driving device.

In a further preferred embodiment of the steering wheel, the first spoke is connected to a bottom of the rim. Accordingly, an upper part may be tilted away from the driver when adjusting the steering wheel from the steering configuration to the storage configuration, resulting in a better view and more available space for the driver. The bottom and top may be defined by gravity and/or with the steering wheel facing straight forward for driving straight forward and/or with the wheels facing straight.

In a further preferred embodiment of the steering wheel, a connection of the second spoke to the rim is spaced apart a quarter of a circumference of the rim to the connection of the first spoke to the rim. Such a design may withstand high-loads and result in a particular robust steering wheel while the arrangement of the second spoke does not require an overly large hub for its support.

In a further preferred embodiment of the steering wheel, the second spoke is connected to the rim in a middle region, in particular the middle of the rim, between its bottom and top. Such an arrangement of the second spoke avoids obstructing handling of the rim with the second spoke, as the hands of the driver are commonly placed at about 10 and 2 o'clock or 4 and 8 o'clock. Further, such arrangement facilitates symmetric steering wheel design and does not hinder tilting of the rim around the pivot axis.

In a further preferred embodiment of the steering wheel, the steering wheel comprises two second spokes arranged symmetrically to each other. Such design results in a very robust steering wheel capable to withstand high loads. Further, this may facilitate symmetric steering wheel design. Preferably each second spoke is being connected to the rim by a respective guide. Preferably the second spokes are arranged on opposite sides of the rim. Usually, the second spokes are arranged radial inwardly to the rim. Preferably one second spoke is arranged on the left side of the wheel and the other on the right side with the steering wheel facing straight forward for driving straight forward and/or with the wheels facing straight. The left and right side may correspond to respective sides of the vehicle. Preferably the two second spokes are arranged coaxial with each other and/or symmetrically to each other.

In a further preferred embodiment of the steering wheel, the whole steering wheel is configured to be moveable from a first position in the steering configuration to a second position in the storage configuration, in particular along the axis of the steering column and/or downwards or upward. Such movement may be understood as comprising also the hub and/or excluding relative movement of the parts of the steering wheel to each other. For example, the whole steering wheel is moved towards the dashboard for storage, thus freeing even more space in the passenger compartment. The downward and/or upward shift may be a shift together with the steering column and/or an angle adjustment of the steering column, as is usually also manually provided on non-autonomous cars for adjusting the steering wheel position to the driver. However, by synchronizing such an adjustment with the configuration change, comfort in the driving configuration and the storage configuration is increased. Preferably, the position of the steering is adjusted simultaneously with or after pivoting of the rim when adjusting the steering wheel between the steering configuration and storage configuration. The steering column may be moved together with the steering wheel, e.g. being retracted along its axis and/or tilted, in particular such that the steering wheel is moved closer to a dashboard of the car and/or away from a driver seat. Preferably, the steering wheel is configured to allow adjustment of the first position, in particular by a driver and/or manually. With a configurable first position, the spatial arrangement of the whole steering wheel may be adjusted to the driver's needs, in particular in the driving configuration.

A second aspect of the invention relates to a steering arrangement with the steering wheel according to the first aspect. Since the steering arrangement according to the second aspect comprises the steering wheel according to the first aspect, improvements, features and embodiments of the first aspect can be considered as examples and embodiments of the second aspect, and vice versa. The steering arrangement may further comprise the steering column of the motor vehicle, a sensor configured to detect the driving mode of the motor vehicle and/or a control unit configured for adjusting the configuration of the steering wheel, in particular in response to the detected driving mode.

A third aspect of the invention relates to a motor vehicle. The motor vehicle comprises the steering arrangement according to the second aspect and/or the steering wheel according to the first aspect. Since the motor vehicle according to the third aspect comprises the steering wheel according to the first aspect and/or the steering arrangement according to the second aspect, improvements, features and embodiments of the first aspect and second aspect can be considered as examples and embodiments of the third aspect, and vice versa. Preferably, the motor vehicle is being configured to be selectable driven in a manual driving mode and an autonomous mode. Further details and definitions of such driving modes may be found above. In particular, the motor vehicle may be configured to automatically adjust the steering wheel configuration in response to a selection of a driving mode.

A fourth aspect of the invention relates to a method for adjusting a steering wheel of a motor vehicle between a storage configuration and a steering configuration. The steering wheel comprises a hub configured to be connected to a steering column of the motor vehicle and a rim connected to the hub. Preferably, the rim is connected to the hub by at least a first spoke and at least one spaced-apart second spoke, wherein the first spoke is pivotably connected to the rim with a pivot axis and wherein the second spoke is mounted to a sliding guide of the hub. Preferably, the steering wheel is configured as the steering wheel according to the first aspect. Similar, the method may also be suitable to adjust the configuration of a steering wheel of the steering arrangement of the second aspect and/or to operate a motor vehicle according to the third aspect. Accordingly, improvements, features and embodiments of the first, second and third aspect can be considered as examples and embodiments of the fourth aspect, and vice versa.

In a preferred embodiment, the method comprises the step of pivoting the rim around the connection between the rim and the first spoke and sliding the second spoke along the guide of the hub when adjusting the configuration of steering wheel, preferably simultaneously. Both movements may be linked. Preferably, for tilting the rim, only an end of the second spoke in the guide is actively moved, for example by an actuator. Corresponding to the adjustment of the configuration, the locking mechanism may be unlocked and locked. In particular, just before adjusting the configuration, the locking mechanism may be unlocked and after arriving at the desired configuration, be reengaged. Preferably, the method comprises detecting a currently selected driving mode of the vehicle and/or adjusting the configuration automatically in response to a selected driving mode of the vehicle. Alternatively or additionally, the adjustment may be performed in response to a change of driving mode, which may correspond to the selection of driving mode.

Other features of the technology will be apparent from consideration of the information contained in the above as well as in or in combination with the following detailed description, abstract, drawings and claims. The present technology is illustrated by way of example, and not by way of limitation, in the figures of the accompanying drawings, in which like reference numerals refer to similar elements including:
Fig. 1 illustrates in a schematic perspective view a first embodiment of a steering wheel of a motor vehicle in its steering configuration.
Fig. 2 illustrates in a schematic perspective view the steering wheel according to Fig. 1 in its storage configuration.
Fig. 3 illustrates in a schematic front view the steering wheel according to Fig. 1.
Fig. 4 illustrates in a schematic perspective view a second embodiment of a steering wheel of a motor vehicle in its storage configuration.
Fig. 5 illustrates in a schematic front view the steering wheel according to Fig. 4.
Fig. 6 illustrates schematically a method for adjusting the configuration of the steering wheel according to Fig. 1 and Fig. 4.

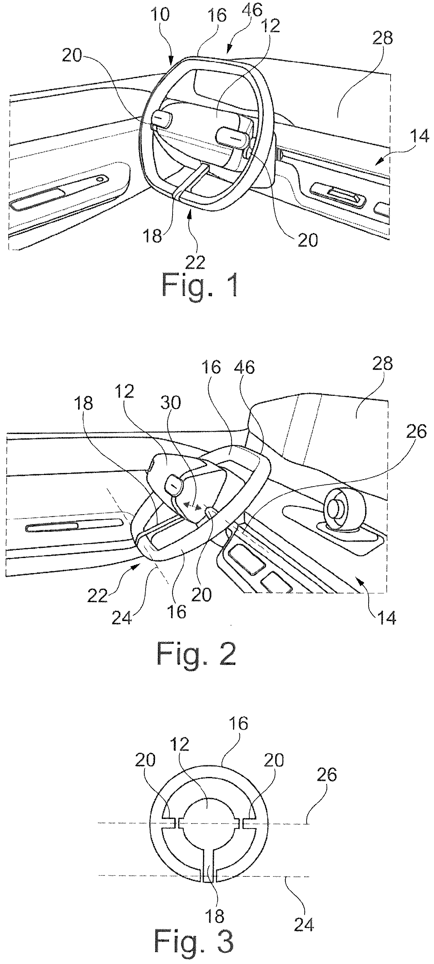

Fig. 1 shows in a schematic perspective front view a steering wheel 10 of a motor vehicle in a steering configuration. The steering wheel 10 comprises a central hub 12, which may be mounted to a steering column of the vehicle that extends through or below a dashboard 14. The steering column may mechanically connect the steering wheel 10 to wheels of the vehicle, such as its front wheels. A turning of the steering wheel 10 may be transmitted to the wheels by the steering column. Alternatively, the steering column may, for example, only provide the bearing and/or shaft for rotatably supporting the steering wheel 10, in particular its hub 12. Especially in the case of a drive-by-wire system, the steering column may therefore have no mechanical connection to the wheels of the vehicle. Alternatively or additionally, the steering wheel 10 and/or the hub 12 may be functionally coupled to rotation sensors. This can allow steering wheel movement to be sensed and the respective sensed steering wheel movement information to be conveyed to structure(s) for changing an angle of the wheels of the vehicle.

The dashboard 14 comprises an instrument screen 28 arranged behind the steering wheel 10, which may be configured as a touchscreen or other form of display. Further, the wheel 10 comprises a rim 16 that is attached to the hub 12. A driver may grab the rim 16 to turn the steering wheel 10 around a central axis that corresponds to an axis of the steering column to control a direction into which the vehicle drives. In Fig. 1 a position of the steering wheel is shown that results in the vehicle driving straight. The hub 12 comprises, e.g., two actuation elements, for example allowing the driver to honk the horn. Further, an airbag may be integrated into the hub 12.

The rim 16 is an essentially continuous ring-shaped and planar rim 16. The lower half of the rim 16 may have a flat section 22, e.g. to provide additional leg room for the driver. Further, the upper half of the rim 16 also has a flat section 46 to improve a view of the driver on the screen 28 and through the windshield. The shape of the rim 16 facilitates comfortable handling and steering. The rim 16 may have other shapes as well, such as forming a circular, elliptical, square or rectangular ring.

As can be seen, the rim 16 is connected to the hub 12 at the lower flat section 22 by a first spoke 18. Further, the steering wheel 10 comprises two oppositely arranged second spokes 20 that are coaxial to each other and spaced apart from the first spoke 18. The spokes 18, 20 allow to support the rim 16 against high loads, allowing to securely steer the vehicle. In particular, the second spokes 20 may support the rim 16 safely even when a strong force is acting on the upper flat section 46, for example due to a driver pressing against the rim 16 in a high-stress situation. Without the second spokes 20, such a force would have a long lever arm with respect to the first spoke 18, which would result in high torque acting on the first spoke 18.

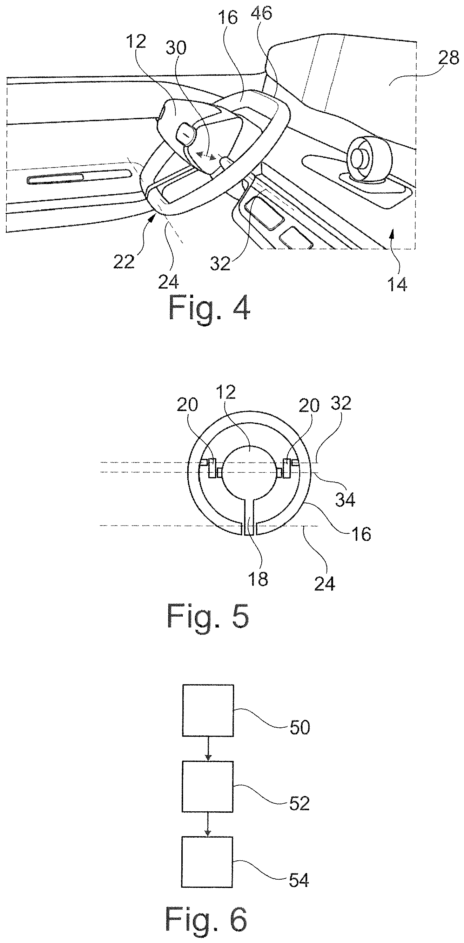

The above details relate to the steering wheel 10 of the first embodiment further illustrated in Fig. 2 and Fig. 3 as well as to the steering wheel 10 of the second embodiment further illustrated in Fig. 4 and Fig. 5.

Fig. 2 illustrates the steering wheel 10 of the first embodiment in a storage configuration. As can be seen, the first spoke 18 is pivotably connected to the rim 16 and rigidly connected to the hub 12. The connection of the first spoke 18 and the rim 16 therefore forms a pivot joint with a pivot axis 24 indicated by the line 24 in Fig. 2 and Fig. 3. Further, an axis 26 of the second spokes 20 is indicated by line 26. For adjusting the steering wheel 10 from the steering configuration to the storage configuration, the rim 16 is pivoted around the pivot axis 24 towards the dashboard 14. As can be seen in Fig. 2, the rim 16 is at least partially resting on the dashboard 14, thus providing the driver with more available space and a better view of the screen 28 and through the windshield.

As can be taken from the front view along the axis of the steering column shown in Fig. 3, such a tilt of the rim 16 will shorten the distance between axis 24 and axis 26 in such a projection. To still allow the second spokes 20 to continue supporting the rim 16, the second spokes 20 are each mounted in a respective sliding guide of the hub. This allows the second spokes 20, together with the axis 26, to glide in the hub 12 towards the dashboard 14. This gliding allows to compensate the position change of the connection between the rim 16 and the second spokes 20 while maintaining a support by the second spokes 20. The gliding of the second spokes 20 in the hub 12 is illustrated in Fig. 2 with the arrow 30, wherein the arrow 30 may also correspond to the sliding guide 30 in the hub 12. To reduce the risk of jamming, both the sliding movement of the second spokes 20 and the form of the sliding guide 30 may follow a curved path with a radius equal to a radial distance of the axis 26 to the axis 24.

The sliding guides 30 may terminate with each respective end at a position that corresponds to the position of the second spokes 20 in a respective configuration, thus forming an end-stop. This may further increase the robustness of the steering wheel 10. Further, the steering wheel 10 may comprise a locking mechanism that blocks the sliding of the second spokes 20, preferably at least fixing the second spokes 20 in place for the steering configuration and/or storage configuration. The locking mechanism may be integrated into the hub 12, in particular the sliding guide 30, resulting in a compact and robust steering wheel 10. In particular, the locking mechanism may be configured to prevent unwanted adjustment of the steering wheel 10 configuration.

The second embodiment of the steering wheel 10 shown in Fig. 4 and Fig. 5 is very similar to the first embodiment. Accordingly, only differences and optional differences will be detailed. In particular, support of the rim 16 is slightly different in the second embodiment. While the rim 16 is still pivotably connected to the first spoke 18, the second spokes 20 are not rigidly connected to both the rim 16 and the hub 12. Instead, each second spoke 20 is connected with a pivot joint to the rim 16, thus forming a second spoke rim link pivot axis 32 indicated by line 32 in Fig. 4 and Fig. 5. Further, each second spoke 20 is connected with a pivot joint to the hub 12, thus forming a second spoke hub link pivot axis 34 indicated by line 34 in Fig. 5. Axis 32 and axis 34 are parallel to each other and to the pivot axis 24.

The second spoke 20 is therefore not rigidly connected but rather forms a pivotable link between the rim 16 and the hub 12. This allows the spoke 20 itself to at least partially compensate for a distance change in the projection of the front view along the axis of the steering column shown in Fig. 5 between the pivot axis 24 and axis 34 and/or 32, respectively. This may facilitate a smooth tilting of the rim 16 around the pivot axis 24. Further, the sliding guide 30 may be shorter and/or straight, resulting in a less expensive to manufacture steering wheel and facilitating packing of other system and components, such as the airbag, in the hub 12. Further, the above-described locking mechanism may be easily integrated in the pivotable link provided by the second spokes 20, in particular in one or each of its associated pivot joints.

Preferably, while the link of the second spoke 20 to the rim 16, respectively the pivot axis 34, is moving along a straight guide 30, the link of the second spoke 20 to the hub 12, respectively the pivot axis 34, is carrying out a movement along an arc. This results in an overall movement overlaid of a translatory movement (the same that pivot axis 34 is carrying out) and a rotational movement around the moving pivot axis 34.

While the steering wheel 10 in the steering configuration is comfortable to use for driving the vehicle, it may at least partially obstruct full view of the instrument screen 28 and/or through the windshield for the driver. This can also easily be seen in Fig. 1. Such a view restriction is acceptable during manual driving of the car, since handling comfort may be safety relevant and since only a limited amount of information needs to be displayed on the screen 28. However, if no manual steering is required, for example in an autonomous driving mode of the motor vehicle, the steering wheel 10 in the steering configuration might unnecessarily restrict the view of the driver and/or unnecessarily occupy space in front of the driver in the passenger compartment.

To overcome this, the steering wheel 10 may be adjusted into its storage configuration, which is shown in the perspective view of Fig. 2 for the first embodiment and in Fig. 4 for the second embodiment. As a result, the steering wheel 10 in the steering configuration does not obstruct the view on the screen 28 anymore and occupies less space in the passenger compartment in front of the driver. As an example, the driver may thus unobstructedly enjoy a movie displayed on the screen 28 during autonomous driving with a very comfortable free space in front of him.

Preferably, the steering wheel 10, in its storage position, always takes a rotational position around the axis of the steering column that corresponds to the straight forward driving position described above. As a result, the flat section 22 of the first rim segment 18 is at the 6 o'clock position, providing increased leg room for the driver, and with the flat section 46 at the opposite upper end providing an improved view.

Preferably, during an adjustment from the steering configuration to the storage configuration, the hub 12 and/or the steering column are moved additionally towards the dashboard 14, for example by telescopic retraction. This frees even more space in front of the driver. Additionally or alternatively, the hub 12 and/or the steering column may also be tilted upwards or downwards to move toward the dashboard 14 and/or away from the driver. Preferably, pivoting of the rim 16 is at least partially simultaneous to the movement of the hub 12 and/or steering column, resulting in a quick adjustment of steering wheel 10 configuration.

Adjusting the steering wheel 10 may be manually performed or preferably by an actuator, such as an electric motor arranged inside the hub 12, beneath the dashboard 14 and/or on the steering column. Adjusting of the steering wheel 10 has been described in the direction from the steering configuration into the storage configuration. Adjusting from the storage configuration into the steering configuration may be achieved, for example, moving the parts of the steering wheel 10 in the reverse direction in the reverse order.

In addition to the adjustment of the steering wheel 10 when selecting an autonomous driving mode, the screen 28 may also be configured to be adjusted between a steering configuration and a viewing configuration. For example, the screen 28 may be moved upward and/or tilted more towards the driver during autonomous driving so that a larger effective screen surface and/or a better view of the screen 28 is provided. In particular, the screen 28 may be moved more in front of the windshield of the vehicle. The screen 28 may also be referred to as a display.

Fig. 6 illustrates schematically a method for adjusting the steering wheel 10 between its configurations. In step 50, a driving mode of the vehicle is detected, preferably with a sensor. In step 52, a desired steering wheel 10 configuration in response to the detected driving mode is selected, preferably with the storage configuration corresponding to an autonomous driving mode and the steering configuration corresponding to a manual driving mode. In particular, the adjustment may be performed in response to a change of driving mode. Such a selection may be performed by a control device. Further, the position of the rim 16 and optionally of the hub 12 is adjusted according to the desired configuration in step 54, preferably by an actuator such as an electric motor. The actuator is preferably controlled by the control device.

### REFERENCE SIGNS LIST

- 10: steering wheel
- 12: hub
- 14: dashboard
- 16: rim
- 18: first spoke
- 20: second spoke
- 22: lower flat section
- 24: pivot axis
- 26: axis
- 28: instrument screen
- 30: guide
- 32: axis
- 34: axis
- 46: flat section
- 50: step
- 52: step
- 54: step

## Claims

1. Steering wheel (10) for a motor vehicle, the steering wheel (10) comprising a hub (12) configured to be connected to a steering column of the motor vehicle and a rim (16) connected to the hub (12),
wherein the steering wheel (10) is configured to be adjusted between a steering configuration and a storage configuration,
wherein the rim (16) is connected to the hub (12) by at least a first spoke (18) and at least one spaced-apart second spoke (20),
wherein the first spoke (18) is pivotably connected to the rim (16) with a pivot axis (24) and
wherein the at least one second spoke (20) is mounted to a sliding guide (30) of the hub (12),
such that the rim (16) pivots around the pivot axis (24) and the second spoke (20) slides along the guide (30) of the hub (12) when the steering wheel (10) is adjusted between the steering configuration and the storage configuration.

2. Steering wheel (10) according to claim 1,
wherein the steering wheel (10) is configured such that the part of the second spoke (20) mounted to the sliding guide (30) is arranged closer to a dashboard (14) of the motor vehicle in the storage configuration than in the steering configuration.

3. Steering wheel (10) according to claim 1 or 2,
wherein the pivot axis (24) is essentially parallel to an axis formed by a straight line between the connection of the second spoke (20) and the rim (16) and the connection of the second spoke (20) and the hub (12) and/or
wherein the pivot axis (24) is arranged at a rim-facing end of the at least one first spoke (18)
and/or
wherein the pivot axis (24) is perpendicular to an axis of the steering column
and/or
wherein the pivot axis (24) and the axis of the steering column do not intersect.

4. Steering wheel (10) according to any one of the previous claims,
wherein the connection between the second spoke (20) and the hub (12) may comprise a locking mechanism for locking the adjustment of the steering wheel (10) configuration.

5. Steering wheel (10) according to any one of the previous claims,
wherein the guide (30) is following an arc defined by the distance between the connection of the first spoke (18) with the rim (16) and the connection of the second spoke (20) with the rim (16) in a view along the pivot axis (24).

6. Steering wheel (10) according to any one of the previous claims 1 to 4, wherein the guide (30) is a straight guide (30).

7. Steering wheel (10) according to any one of the previous claims,
wherein the second spoke (20) is pivotably connected to the hub (12) with a second spoke hub link component defining a hub link pivot axis (34) and
wherein the second spoke (20) is pivotably connected to the rim (16) with a second spoke rim link component defining a rim link pivot axis (32),
wherein the hub link pivot axis (34) and the rim link pivot axis (32) are parallel to each other.

8. Steering wheel (10) according to claim 7,
wherein the hub link pivot axis (34) and the rim link pivot axis (32) are parallel to the pivot axis (24) at the connection of the first spoke (18) with the rim (16).

9. Steering wheel (10) according to any one of the previous claims,
wherein the steering wheel (10) comprises an actuator, such as an electric motor, for adjusting the steering wheel (10) between the storage configuration and the steering configuration, in particular by moving the second spoke (20) along the guide (30).

10. Steering wheel (10) according to any one of the previous claims,
wherein the steering wheel (10) is configured to be adjusted into the steering configuration in response to a change into a manual driving mode of the motor vehicle and into the storage configuration in response to a change into an autonomous driving mode of the motor vehicle.

11. Steering wheel (10) according to any one of the previous claims,
wherein the first spoke (18) is connected to a bottom of the rim (16)
and/or
wherein a connection of the second spoke (20) to the rim (16) is spaced apart a quarter of a circumference of the rim (16) to the connection of the first spoke (18) to the rim (16)
and/or
wherein the second spoke (20) is connected to the rim (16) in a middle region, in particular the middle of the rim (16), between its bottom and top.

12. Steering wheel (10) according to any one of the previous claims,
wherein the steering wheel (10) comprises two second spokes (20) arranged symmetrically to each other.

13. Steering arrangement with the steering wheel (10) according to any one of the previous claims, further comprising at least one of:
- the steering column of the motor vehicle;
- a sensor configured to detect the driving mode of the motor vehicle; and
- a control unit configured for adjusting the configuration of the steering wheel (10), in particular in response to the detected driving mode.

14. Motor vehicle comprising the steering arrangement according to claim 13 and/or the steering wheel (10) according to any one of the previous claims 1 to 12, the motor vehicle preferably being configured to be selectably driven in a manual driving mode and an autonomous mode.

15. Method to adjust a steering wheel (10) of a motor vehicle between a storage configuration and a steering configuration, preferably the steering wheel (10) according to any one of the previous claims 1 to 12, the steering wheel (10) comprising a hub (12) configured to be connected to a steering column of the motor vehicle and a rim (16) connected to the hub (12), wherein the rim (16) is connected to the hub (12) by at least a first spoke (18) and at least one spaced-apart second spoke (20), wherein the first spoke (18) is pivotably connected to the rim (16) with a pivot axis (24) and wherein the second spoke (20) is mounted to a sliding guide (30) of the hub (12),
wherein the method comprises pivoting the rim (16) around the connection between the rim (16) and the first spoke (18) and sliding the second spoke (20) along the guide (30) of the hub (12) when adjusting the configuration of steering wheel, preferably simultaneously.

## Patentansprüche

1. Lenkrad (10) für ein Kraftfahrzeug, wobei das Lenkrad (10) eine Nabe (12), die dazu eingerichtet ist, mit einer Lenksäule des Kraftfahrzeugs verbunden zu werden, und einen mit der Nabe (12) verbundenen Kranz (16) aufweist,
wobei das Lenkrad (10) dazu eingerichtet ist, zwischen einer Lenkkonfiguration und einer Verstaukonfiguration eingestellt zu werden,
wobei der Kranz (16) über mindestens eine erste Speiche (18) und mindestens eine davon beabstandete zweite Speiche (20) mit der Nabe (12) verbunden ist,
wobei die erste Speiche (18) mit einer Schwenkachse (24) verschwenkbar mit dem Kranz (16) verbunden ist und wobei die mindestens eine zweite Speiche (20) an einer Schiebeführung (30) der Nabe (12) montiert ist,
so dass sich der Kranz (16) um die Schwenkachse (24) verschwenkt und die zweite Speiche (20) entlang der Führung (30) der Nabe (12) gleitet, wenn das Lenkrad (10) zwischen der Lenkkonfiguration und der Verstaukonfiguration eingestellt wird.

2. Lenkrad (10) nach Anspruch 1,
wobei das Lenkrad (10) derart eingerichtet ist, dass der Teil der zweiten Speiche (20), der an der Schiebeführung (30) montiert ist, in der Verstaukonfiguration näher an einem Armaturenbrett (14) des Kraftfahrzeugs angeordnet ist als in der Lenkkonfiguration.

3. Lenkrad (10) nach Anspruch 1 oder 2,
wobei die Schwenkachse (24) im Wesentlichen parallel zu einer Achse verläuft, die durch eine Gerade zwischen der Verbindung der zweiten Speiche (20) und dem Kranz (16) und der Verbindung der zweiten Speiche (20) und der Nabe (12) ausgebildet ist,
und/oder
wobei die Schwenkachse (24) an einem dem Kranz zugewandten Ende der mindestens einen ersten Speiche (18) angeordnet ist
und/oder
wobei die Schwenkachse (24) senkrecht zu einer Achse der Lenksäule verläuft
und/oder
wobei die Schwenkachse (24) und die Achse der Lenksäule sich nicht schneiden.

4. Lenkrad (10) nach einem der vorstehenden Ansprüche, wobei die Verbindung zwischen der zweiten Speiche (20) und der Nabe (12) einen Verriegelungsmechanismus zum Verriegeln der Einstellung der Konfiguration des Lenkrads (10) aufweisen kann.

5. Lenkrad (10) nach einem der vorstehenden Ansprüche, wobei die Führung (30), entlang der Schwenkachse (24) gesehen, einem durch den Abstand zwischen der Verbindung der ersten Speiche (18) mit dem Kranz (16) und der Verbindung der zweiten Speiche (20) mit dem Kranz (16) definierten Bogen folgt.

6. Lenkrad (10) nach einem der vorstehenden Ansprüche 1 bis 4,
wobei die Führung (30) eine gerade Führung (30) ist.

7. Lenkrad (10) nach einem der vorstehenden Ansprüche, wobei die zweite Speiche (20) mit der Nabe (12) verschwenkbar verbunden ist, wobei eine Verbindungskomponente der zweiten Speiche und der Nabe eine Nabenverbindungsschwenkachse (34) definiert, und wobei die zweite Speiche (20) mit dem Kranz (16) verschwenkbar verbunden ist, wobei eine Verbindungskomponente der zweiten Speiche und dem Kranz eine Kranzverbindungsschwenkachse (32) definiert, wobei die Nabenverbindungsschwenkachse (34) und die Kranzverbindungsschwenkachse (32) parallel zueinander sind.

8. Lenkrad (10) nach Anspruch 7,
wobei die Nabenverbindungsschwenkachse (34) und die Kranzverbindungsschwenkachse (32) zur Schwenkachse (24) parallel sind, an der Verbindung der ersten Speiche (18) mit dem Kranz (16).

9. Lenkrad (10) nach einem der vorstehenden Ansprüche, wobei das Lenkrad (10) einen Aktuator aufweist, zum Beispiel einen Elektromotor, um das Lenkrad (10) zwischen der Lenkkonfiguration und der Verstaukonfiguration, insbesondere durch Bewegen der zweiten Speiche (20) entlang der Führung (30), einzustellen.

10. Lenkrad (10) nach einem der vorstehenden Ansprüche, wobei das Lenkrad (10) dazu eingerichtet ist, in Reaktion auf einen Wechsel in einen manuellen Fahrmodus des Kraftfahrzeugs in die Lenkkonfiguration eingestellt zu werden und in Reaktion auf einen Wechsel in einen autonomen Fahrmodus des Kraftfahrzeugs in die Verstaukonfiguration eingestellt zu werden.

11. Lenkrad (10) nach einem der vorstehenden Ansprüche, wobei die erste Speiche (18) mit einer Unterseite des Kranzes (16) verbunden ist
und/oder
wobei eine Verbindung der zweiten Speiche (20) mit dem Kranz (16) um ein Viertel des Umfangs des Kranzes (16) von der Verbindung der ersten Speiche (18) mit dem Kranz (16) beabstandet ist
und/oder
wobei die zweite Speiche (20) in einem mittleren Bereich, insbesondere in der Mitte des Kranzes (16), zwischen dessen Unter- und Oberseite, mit dem Kranz (16) verbunden ist.

12. Lenkrad (10) nach einem der vorstehenden Ansprüche, wobei das Lenkrad (10) zwei zweite Speichen (20) aufweist, die symmetrisch zueinander angeordnet sind.

13. Lenkanordnung mit dem Lenkrad (10) nach einem der vorstehenden Ansprüche, ferner aufweisend mindestens eines der folgenden Elemente:
- die Lenksäule des Kraftfahrzeugs;
- einen Sensor, der dazu eingerichtet ist, den Fahrmodus des Kraftfahrzeugs zu detektieren; und
- eine Steuereinheit, die dazu eingerichtet ist, die Konfiguration des Lenkrads (10), insbesondere in Reaktion auf den detektierten Fahrmodus, einzustellen.

14. Kraftfahrzeug, das die Lenkanordnung nach Anspruch 13 und/oder das Lenkrad (10) nach einem der vorstehenden Ansprüche 1 bis 12 aufweist, wobei das Kraftfahrzeug vorzugsweise dazu eingerichtet ist, selektiv in einem manuellen Fahrmodus und einem autonomen Modus gefahren zu werden.

15. Verfahren zum Einstellen eines Lenkrads (10) eines Kraftfahrzeugs zwischen einer Verstaukonfiguration und einer Lenkkonfiguration, vorzugsweise das Lenkrad (10) nach einem der vorstehenden Ansprüche 1 bis 12, wobei das Lenkrad (10) eine Nabe (12), die dazu eingerichtet ist, mit einer Lenksäule des Kraftfahrzeugs verbunden zu werden, und einen mit der Nabe (12) verbundenen Kranz (16) aufweist, wobei der Kranz (16) über mindestens eine erste Speiche (18) und mindestens eine davon beabstandete zweite Speiche (20) mit der Nabe (12) verbunden ist, wobei die erste Speiche (18) mit einer Schwenkachse (24) verschwenkbar mit dem Kranz (16) verbunden ist und wobei die zweite Speiche (20) an einer Schiebeführung (30) der Nabe (12) montiert ist,
wobei das Verfahren, vorzugsweise gleichzeitig, das Verschwenken des Kranzes (16) um die Verbindung zwischen dem Kranz (16) und der ersten Speiche (18) und das Gleiten der zweiten Speiche (20) entlang der Führung (30) der Nabe (12) beim Einstellen der Konfiguration des Lenkrads aufweist.

## Revendications

1. Volant de direction (10) pour un véhicule à moteur, le volant de direction (10) comprenant
un moyeu (12) conçu pour être raccordé à une colonne de direction du véhicule à moteur et une jante (16) raccordée au moyeu (12),
dans lequel le volant de direction (10) est conçu pour être réglé entre une configuration de direction et une configuration de rangement,
dans lequel la jante (16) est raccordée au moyeu (12) par au moins un premier rayon (18) et au moins un second rayon (20) espacé,
dans lequel le premier rayon (18) est raccordé de manière pivotante à la jante (16) avec un axe de pivotement (24) et
dans lequel l'au moins un second rayon (20) est installé sur un guide de coulissement (30) du moyeu (12),
de telle sorte que la jante (16) pivote autour de l'axe de pivotement (24) et le second rayon (20) coulisse le long du guide (30) du moyeu (12) lorsque le volant de direction (10) est réglé entre la configuration de direction et la configuration de rangement.

2. Volant de direction (10) selon la revendication 1,
le volant de direction (10) étant conçu de telle sorte que la partie du second rayon (20) installée sur le guide de coulissement (30) soit placée plus près d'un tableau de bord (14) du véhicule à moteur dans la configuration de rangement que dans la configuration de direction.

3. Volant de direction (10) selon la revendication 1 ou 2,
dans lequel l'axe de pivotement (24) est essentiellement parallèle à un axe formé par une ligne droite entre la jonction du second rayon (20) et de la jante (16) et la jonction du second rayon (20) et du moyeu (12)
et/ou
dans lequel l'axe de pivotement (24) est placé à une extrémité côté jante de l'au moins un premier rayon (18)
et/ou
dans lequel l'axe de pivotement (24) est perpendiculaire à un axe de la colonne de direction
et/ou
dans lequel l'axe de pivotement (24) et l'axe de la colonne de direction ne se croisent pas.

4. Volant de direction (10) selon l'une quelconque des revendications précédentes,
dans lequel la jonction entre le second rayon (20) et le moyeu (12) peut comprendre un mécanisme de blocage pour bloquer le réglage de la configuration du volant de direction (10).

5. Volant de direction (10) selon l'une quelconque des revendications précédentes,
dans lequel le guide (30) suit un arc défini par la distance entre la jonction du premier rayon (18) et de la jante (16) et la jonction du second rayon (20) et de la jante (16) dans une vue le long de l'axe de pivotement (24) .

6. Volant de direction (10) selon l'une quelconque des revendications précédentes 1 à 4,
dans lequel le guide (30) est un guide (30) droit.

7. Volant de direction (10) selon l'une quelconque des revendications précédentes,
dans lequel le second rayon (20) est raccordé de manière pivotante au moyeu (12) au moyen d'un composant de liaison second rayon-moyeu définissant un axe de pivotement de liaison de moyeu (34) et
dans lequel le second rayon (20) est raccordé de manière pivotante à la jante (16) au moyen d'un composant de liaison second rayon-jante définissant un axe de pivotement de liaison de jante (32),
dans lequel l'axe de pivotement de liaison de moyeu (34) et l'axe de pivotement de liaison de jante (32) sont parallèles l'un à l'autre.

8. Volant de direction (10) selon la revendication 7,
dans lequel l'axe de pivotement de liaison de moyeu (34) et l'axe de pivotement de liaison de jante (32) sont parallèles à l'axe de pivotement (24) au niveau de la jonction du premier rayon (18) et de la jante (16).

9. Volant de direction (10) selon l'une quelconque des revendications précédentes,
le volant de direction (10) comprenant un actionneur, tel qu'un moteur électrique, pour régler le volant de direction (10) entre la configuration de rangement et la configuration de direction, en particulier en déplaçant le second rayon (20) le long du guide (30).

10. Volant de direction (10) selon l'une quelconque des revendications précédentes,
le volant de direction (10) étant conçu pour être réglé sur la configuration de direction en réaction à un passage à un mode de conduite manuel du véhicule à moteur et sur la configuration de rangement en réaction à un passage à un mode de conduite autonome du véhicule à moteur.

11. Volant de direction (10) selon l'une quelconque des revendications précédentes,
dans lequel le premier rayon (18) est raccordé à une partie inférieure de la jante (16)
et/ou
dans lequel une jonction du second rayon (20) et de la jante (16) est espacée d'un quart d'une circonférence de la jante (16) par rapport à la jonction du premier rayon (18) et de la jante (16)
et/ou
dans lequel le second rayon (20) est raccordé à la jante (16) dans une région médiane, en particulier au milieu de la jante (16), entre ses parties inférieure et supérieure.

12. Volant de direction (10) selon l'une quelconque des revendications précédentes,
le volant de direction (10) comprenant deux seconds rayons (20) placés symétriquement l'un par rapport à l'autre.

13. Système de direction comportant le volant de direction (10) selon l'une quelconque des revendications précédentes, comprenant en outre au moins un des éléments suivants :
- la colonne de direction du véhicule à moteur ;
- un capteur conçu pour détecter le mode de conduite du véhicule à moteur ; et
- une unité de commande conçue pour régler la configuration du volant de direction (10), en particulier en réaction au mode de conduite détecté.

14. Véhicule à moteur comprenant le système de direction selon la revendication 13 et/ou le volant de direction (10) selon l'une quelconque des revendications précédentes 1 à 12, le véhicule à moteur étant, de préférence, conçu pour être conduit de manière sélective en mode de conduite manuel ou en mode autonome.

15. Procédé de réglage d'un volant de direction (10) d'un véhicule à moteur entre une configuration de rangement et une configuration de direction, le volant de direction (10) étant, de préférence, selon l'une quelconque des revendications précédentes 1 à 12, le volant de direction (10) comprenant un moyeu (12) conçu pour être raccordé à une colonne de direction du véhicule à moteur et une jante (16) raccordée au moyeu (12),
dans lequel la jante (16) est raccordée au moyeu (12) par au moins un premier rayon (18) et au moins un second rayon (20) espacé, dans lequel le premier rayon (18) est raccordé de manière pivotante à la jante (16) avec un axe de pivotement (24) et dans lequel le second rayon (20) est installé sur un guide de coulissement (30) du moyeu (12),
le procédé comprenant le fait de faire pivoter la jante (16) autour de la jonction entre la jante (16) et le premier rayon (18) et le fait de faire coulisser le second rayon (20) le long du guide (30) du moyeu (12) lors du réglage de la configuration du volant de direction, de préférence simultanément.
